# EUROPÄISCHE PATENTSCHRIFT

(11) **EP 1 992 828 B1**
(45) Veröffentlichungstag und Bekanntmachung des Hinweises auf die Patenterteilung: **13.04.2011**
(21) Anmeldenummer: 08103816.8
(22) Anmeldetag: 05.05.2008
(51) Int. Cl.: F16B 13/06

(54) **Vorrichtung zum Verschalen einer Öffnung in einem Bauteil**
Device for configuring an aperture in a component
Dispositif de coffrage d'une ouverture dans un composant

(30) Priorität: 16.05.2007 DE 102007000278
(43) Veröffentlichungstag der Anmeldung: 19.11.2008
(73) Patentinhaber: HILTI Aktiengesellschaft, 9494 Schaan (LI)
(72) Erfinder: Paetow, Mario, 86859 Igling (DE); Heimerl, Sabine, 86830 Schwabmünchen (DE)
(74) Vertreter: Wildi, Roland

(56) Entgegenhaltungen:
- FR-A1- 2 318 334
- FR-A1- 2 398 208
- US-A- 1 349 977

## Beschreibung

Die Erfindung betrifft eine Vorrichtung zum Verschalen einer Öffnung in einem Bauteil, der im Oberbegriff von Patentanspruch 1 genannten Art (FR 2 398 208 A). Derartige Vorrichtungen dienen dem Abdecken bzw. Verschliessen von, in Bauteilen, wie Wänden oder Decken, angeordneten Öffnungen an einer ersten Seite, bevor diese Öffnungen von einer zweiten Seite mit mineralischen Baustoffen oder anderen Massen verfüllt werden.

Es wird dabei z. B. eine Schalungsplatte, wie z. B. ein Schalungsbrett, mit mehreren Dübeln und in diesen eingedrehten Schrauben an einer ersten Seite der Öffnung angebracht um die Öffnung dort zu verschliessen. Dazu müssen zunächst seitlich der Öffnung mehrere Bohrungen zur Aufnahme der Dübel in das Bauteil eingebracht werden und entsprechende Löcher in der Schalungsplatte vorgesehen werden. Daraufhin kann die Schalungsplatte z. B. mit Schrauben in den Dübellöchern verankert werden. Diese Art der Befestigung ist recht aufwändig.

Aus der DE 2 732 393 A1 ist eine solche Befestigung einer Platte an einem Bauteil mittels eines Dübels und einer Schraube bekannt, bei der der Dübel in eine Bohrung im Bauteil eingebracht wird und dann eine Schraube durch ein Loch in der Platte in den Dübel eingeschraubt wird um die Platte am Bauteil festzulegen.

Wird eine derartige Platte als Schalungselement zum Verschalen einer Öffnung in einem Bauteil verwendet, dann muss also seitlich der Öffnung wenigstens eine Bohrung für den Dübel erstellt werden, was zeitaufwändig ist.

Der vorliegenden Erfindung liegt die Aufgabe zugrunde, eine Vorrichtung zum Verschalen einer Öffnung in einem Bauteil bereitzustellen, die die genannten Nachteile vermeidet und die eine einfache und schnelle Montage an einem Bauteil ermöglicht und erhöhte Halte Kräfte bereitstellt.

Diese Aufgabe wird erfindungsgemäss durch die im kennzeichnenden Teil von Anspruch 1 genannten Massnahmen erreicht. Demnach sind an dem Schalungselement als Befestigungsmittel wenigstens ein Spreizband und ein mit einer Durchführöffnung versehenes Sperrelement für ein Gegensperrelement angeordnet, wobei ein Abstand zwischen dem Sperrelement und dem Schalungselement entlang des Gegensperrelements zum Spreizen des Spreizbandes verkleinerbar ist. Das wenigstens eine Spreizband wird dadurch bei einer Verkleinerung des Abstandes zwischen dem Sperrelement und dem Schalungselement nach aussen zur Innenwand der Öffnung hin gespreizt bzw. ausgelenkt, so dass die Vorrichtung an der Öffnung reib- bzw. kraftschlüssig fixiert wird. Das Fixieren der Vorrichtung kann dabei vorteilhaft von der dem Schalungselement abgewandten Seite der Öffnung aus erfolgen.

Das wenigstens eine Spreizband weist an wenigstens einer Flachseite Verkrallungselemente auf. Diese Verkrallungselemente erhöhen bei der Festlegung der Vorrichtung an der Öffnung die Haltekräfte des Spreizbandes an der Innenwand der Öffnung.

Günstigerweise sind die Verkrallungselemente dabei als Zähne einer Zahnung ausgebildet, die Unebenheiten der Innenwand auch formschlüssig hintergreifen können.

Herstellungstechnisch günstig ist es ferner, wenn das wenigstens eine Spreizband einteilig mit dem Sperrelement ausgebildet ist.

Konstruktiv von Vorteil ist es auch, wenn das Sperrelement an einem dem Schalungselement abgewandten ersten Ende des Spreizbandes angeordnet ist.

Vorteilhaft sind mehrere Spreizbänder vorgesehen, die an ihren dem Schalungselement abgewandten ersten Enden über das Sperrelement miteinander verbunden sind, wodurch eine symmetrische Aufbringung der Haltekräfte gegenüber der Innenwand möglich ist, bei der das Sperrelement axial in der Öffnung angeordnet werden kann.

Günstig ist es ferner, wenn das Schalungselement ein erstes Teil und ein zweites Teil aufweist, die entlang eines Klapplagers klappbeweglich miteinander verbunden sind. Hierdurch wird es möglich das Schalungselement durch Einklappen zu verkleinern und durch die Öffnung in einem Bauelement hindurchzuführen. Die Montage der Vorrichtung kann dadurch gänzlich von der Seite der Öffnung aus erfolgen, die der zu verschalenden Seite der Öffnung gegenüber liegt.

In den Zeichnungen ist die Erfindung in einem Ausführungsbeispiel dargestellt.

Es zeigen:
- Fig. 1: eine erfindungsgemässe Vorrichtung zum Verschalen einer Öffnung in einem Bauteil im Längsschnitt, an einer Öffnung;
- Fig. 2: ein Detail der Vorrichtung aus Fig. 1 gemäss der Markierung II;
- Fig. 3: die Vorrichtung aus Fig. 1 in einem an der Öffnung festgelegten Zustand.

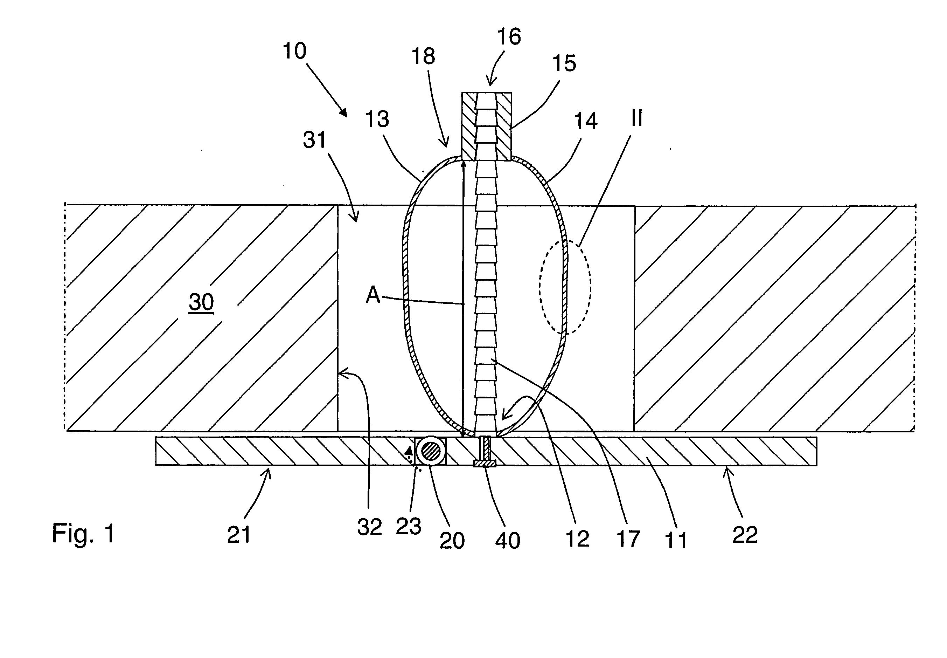

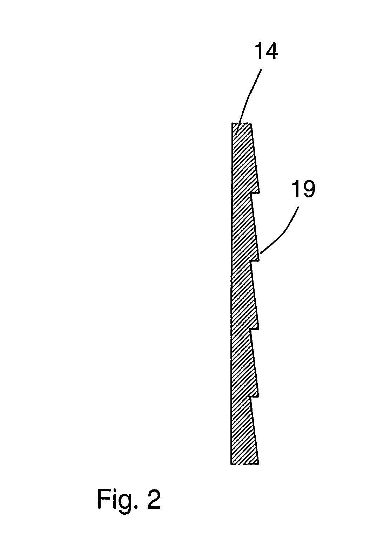

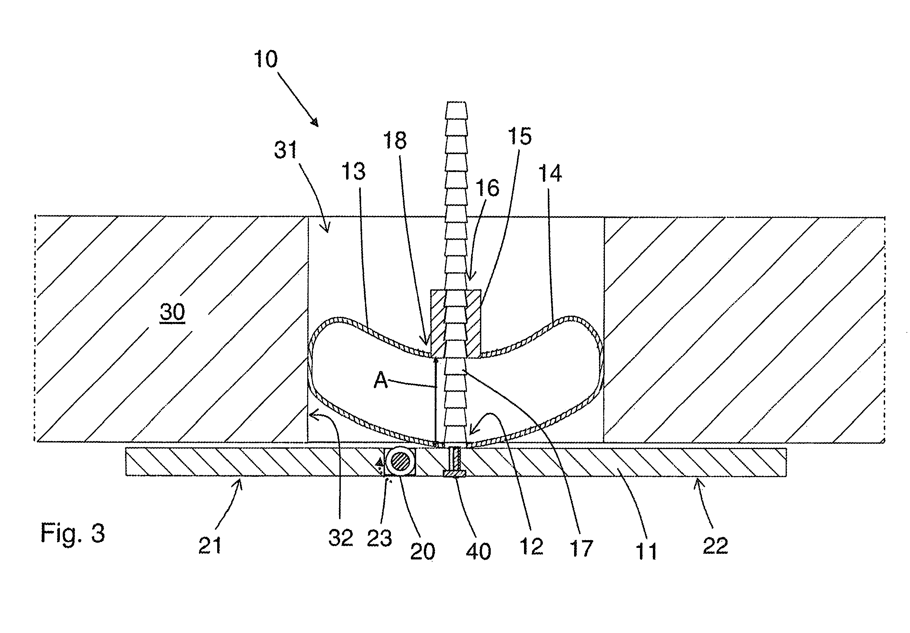

In den Figuren 1 bis 3 ist eine erfindungsgemässe Vorrichtung 10 zum Verschalen einer Öffnung 31 in einem Bauteil 30 dargestellt, die ein plattenförmiges Schalungselement 11 und zwei daran festgelegte Spreizbänder 13, 14 aufweist. Die Spreizbänder 13, 14 weisen jeweils wenigstens auf einer Flachseite eine mit Verkrallungselementen 19, wie z. B. den Zähnen einer Zahnung, versehene Oberfläche auf (vgl. insbesondere Figur 2). An den vom Schalungselement 11 abgewandten ersten Enden 18 der Spreizbänder 13, 14 ist ein Sperrelement 15 an diesen festgelegt, welches beide Spreizbänder 13, 14 miteinander verbindet und welches eine Durchführöffnung 16 mit darin angeordnetem Sperrmittel (in den Figuren 1 und 3 nicht sichtbar) für ein Gegensperrelement 17 aufweist. Das Gegensperrelement 17 kann z. B. eine Zahnung aufweisen, die mit den Sperrmitteln in der Durchführöffnung 16 zusammenwirkt. Das Gegensperrelement 17 und die Spreizbänder 13, 14 sind vorliegend an ihren dem Sperrelement 15 gegenüberliegenden zweiten Enden 12 miteinander verbunden und vorzugsweise einteilig z. B. als Kunststoffteil gefertigt. Die Spreizbänder 13, 14 und das Gegensperrelement 17 sind an diesen zweiten Enden 12 an dem Schalungselement 11 festgelegt. Diese Festlegung der Spreizbänder 13, 14 und des Gegensperrelements 17 am Schalungselement 11 kann z. B. über ein Befestigungselement 40 erfolgen oder z. B. auch durch eine Klebeverbindung.

Das Schalungselement 11 ist zweiteilig ausgebildet und weist ein erstes Teil 21 und ein zweites Teil 22 auf die über ein Klapplager 20 miteinander verbunden sind. Das erste Teil 21 ist dabei in Richtung des Pfeils 23 relativ zum zweiten Teil 22 verschwenkbar, wodurch das Schalungselement 11 verkleinerbar ist, um dieses durch eine Öffnung 31 in einem Bauteil 30 hindurchführen zu können.

In Fig. 3 wurde das Gegensperrelement 17 durch die Durchführöffnung 16 im Sperrelement 15 hindurchbewegt, wodurch der Abstand A zwischen dem Schalungselement 11 und dem Sperrelement 15 verkürzt wurde. Hierdurch wurden die Spreizbänder 13, 14 bezogen auf die Projektion des Sperrelements 15 zum Schalungselement 11 hin nach radial aussen gespreizt, wodurch die Verkrallungselemente 19 bzw. die Zahnung an den Spreizbändern 13, 14 in Anlage an eine Innenwand 32 der Öffnung 31 kommen, so dass die Vorrichtung 10 an der Öffnung 31 gehalten ist und das Schalungselement 11 die Öffnung 31 im Bauteil 30 verschliesst.

## Patentansprüche

1. Vorrichtung zum Verschalen einer Öffnung (31) in einem Bauteil (30), mit wenigstens einem Schalungselement (11), das über wenigstens ein Befestigungsmittel an dem Bauteil festlegbar ist.
an dem Schalungselement (11) als Befestigungsmittel wenigstens ein Spreizband (13, 14) und ein mit einer Durchführöffnung (16) versehenes Sperrelement (15) für ein Gegensperrelement (17) festgelegt ist, wobei ein Abstand (A) zwischen dem Sperrelement (15) und dem Schalungselement (11) entlang des Gegensperrelements (17) zum Spreizen des Spreizbandes (13, 14) verkleinerbar ist,
**dadurch gekennzeichnet, dass** das wenigstens eine Spreizband (13, 14) an wenigstens einer Flachseite Verkrallungselemente (19) aufweist.

2. Vorrichtung nach Anspruch 1, **dadurch gekennzeichnet, dass** die Verkrallungselemente (19) als Zähne einer Zahnung ausgebildet sind.

3. Vorrichtung nach Anspruch 1, **dadurch gekennzeichnet, dass** das wenigstens eine Spreizband (13, 14) einteilig mit dem Sperrelement (15) ausgebildet ist.

4. Vorrichtung nach einem der Ansprüche 1 bis 3, **dadurch gekennzeichnet, dass** das Sperrelement (15) an einem dem Schalungselement (11) abgewandten ersten Ende (18) des Spreizbandes (13, 14) angeordnet ist.

5. Vorrichtung nach einem der Ansprüche 1 bis 4, **dadurch gekennzeichnet, dass** mehrere Spreizbänder (13, 14) vorgesehen sind, die an ihren dem Schalungselement (11) abgewandten ersten Enden (18) über das Sperrelement (15) miteinander verbunden sind.

6. Vorrichtung nach einem der Ansprüche 1 bis 3, **dadurch gekennzeichnet, dass** das Schalungselement ein erstes Teil (21) und ein zweites Teil (22) aufweist, die entlang eines Klapplagers (20) klappbeweglich miteinander verbunden sind.

## Claims

1. Device for configuring an aperture (31) in a component (30), with at least one casing element (11), which may be fixed on the component through at least one means of fastening,
at least one expanding band (13, 14) and a locking element (15) provided with a feed through opening (16) for a counter locking element (17) is fixed on the casing element (11) as a means of fastening, in which a distance (A) between the locking element (15) and the casing element (11) may be reduced along the counter locking element (17) for expanding the expanding band (13, 14),
**characterised in that** at least one expanding band (13, 14) has catching elements (19) on at least one flat side.

2. Device according to claim 1, **characterised in that** the catching elements (19) are made as the teeth of toothing.

3. Device according to claim 1, **characterised in that** at least one expanding band (13, 14) is made in one piece with the locking element (15).

4. Device according to one of claims 1 to 3, **characterised in that** the locking element (15) is arranged on a first end (18) of the expanding band (13, 14) turned away from the casing element (11).

5. Device according to one of claims 1 to 4, **characterised in that** several expanding bands (13, 14) are provided, which are connected to each other at the first ends (18) turned away from the casing element (11) through the locking element (15).

6. Device according to one of claims 1 to 3, **characterised in that** the casing element has a first part (21) and a second part (22), which are connected to each other along a tilting bearing (20) so that they may tilt.

## Revendications

1. Dispositif de coffrage d'une ouverture (31) dans un composant de construction (30), comportant au moins un élément de coffrage (11) qui peut être fixé sur le composant de construction par l'intermédiaire d'au moins un élément de fixation, élément de coffrage (11) sur lequel est fixée au moins une attache extensible (13, 14) faisant office d'élément de fixation et un élément de blocage (15) muni d'une ouverture traversante (16) pour un élément de blocage complémentaire (17), dans lequel une distance (A) entre l'élément de blocage (15) et l'élément de coffrage (11) peut être réduite le long de l'élément de blocage complémentaire (17) afin de détendre l'attache extensible (13, 14), **caractérisé en ce que** la au moins une attache extensible (13, 14) comporte des éléments en saillie (19) sur au moins une surface plate.

2. Dispositif selon la revendication 1, **caractérisé en ce que** les éléments en saillie (19) ont la forme des dents d'une denture.

3. Dispositif selon la revendication 1, **caractérisé en ce que** la au moins une attache extensible (13, 14) est formée d'un seul tenant avec l'élément de blocage (15).

4. Dispositif selon l'une quelconque des revendications 1 à 3, **caractérisé en ce que** l'élément de blocage (15) est agencé sur une première extrémité (18) espacée de l'élément de coffrage (11) de l'attache extensible (13, 14).

5. Dispositif selon l'une quelconque des revendications 1 à 4, **caractérisé en ce que** sont prévues plusieurs attaches extensibles (13, 14) reliées les unes aux autres au niveau de leurs premières extrémités (18) espacées de l'élément de coffrage (11), par l'intermédiaire de l'élément de blocage (15).

6. Dispositif selon l'une quelconque des revendications 1 à 3, **caractérisé en ce que** l'élément de coffrage comporte une première partie (21) et une seconde partie (22) qui sont reliées l'une à l'autre de manière articulée le long d'un palier d'articulation (20).
